# EUROPEAN PATENT SPECIFICATION

(11) **EP 0 341 850 B1**
(45) Date of publication and mention of the grant of the patent: **05.07.1995**
(21) Application number: 89304033.7
(22) Date of filing: 24.04.1989
(51) Int. Cl.: H04N 1/32, H04N 1/04, H04N 1/21

(54) **Document reading devices**
Dokumentenlesegeräte
Dispositifs de lecture de document

(30) Priority: 25.04.1988 JP 102268/88
(43) Date of publication of application: 15.11.1989
(73) Proprietor: FUJITSU LIMITED, Kawasaki-shi, Kanagawa 211 (JP)
(72) Inventor: Asano, Junichi, Kawasaki-shi Kanagawa 211 (JP); Tabata, Yoshio, Nakahara-ku Kawasaki-shi Kanagawa 211 (JP); Kanemitsu, Norio, Miyamae-ku Kawasaki-shi Kanagawa 213 (JP)
(74) Representative: Fane, Christopher Robin King

(56) References cited:
- GB-A- 2 130 838
- US-A- 4 254 439
- PATENT ABSTRACTS OF JAPAN, vol. 9, no. 255 (E-349)[1978], 12th October 1985;& JP-A-60 103 769

## Description

This invention relates to document reading devices for use, for example, with personal computers or work stations.

In one form of information processing system, image information read by an image reading device is transmitted to a host computer such as a personal computer, a work station or the like, for processing the image.

In the reading operation of such an image reading device, the amount of information read by the image reading device may be large compared with the memory capacity provided in the host computer, so that the reading operation of the reading means in the reading device may sometimes have to be interrupted during the document scanning process.

When the operation of the reading means is interrupted, the image information currently in the host computer will be processed, whereafter the transmission of further information becomes possible, and the reading operation can be restarted.

However, when the reading operation has been interrupted, on restarting the reading operation, it is difficult to restart the reading operation at the exact position at which the reading operation was stopped, due to the transient characteristics of the drive system.

To overcome this problem, the same assignee as that of this invention has already proposed a vertical scanning method in the specification of Japanese Unexamined Patent Publication No. JP-A- 61-131 673.

In this method, before restarting the reading operation, the drive system for the reading means is moved back a predetermined distance, taking into account the transient characteristics of the drive system, and the reading of image information is started again from a restart position subsequent to the set-back position, which restart position is assumed to coincide with the position at which the interruption occurred.

However, in the previously-proposed method described above, this restart position, from which the reading image information is restarted after the drive system for the reading means has been moved back, does not necessarily always coincide with the position at which the reading operation was interrupted.

If such a situation occurs, a discontinuity in the final image information will be generated at the position at which the reading operation was interrupted, thereby causing the image information thus reproduced to be incorrect.

One proposal aimed at overcoming the problem of splitting or overlapping of a scanned image due to an interruption in the reading operation is disclosed in US-A- 4 254 439.

The US patent describes a document reading device (facsimile machine) which includes reading means operable, when the device is performing a reading operation, to scan a document in a predetermined scanning sequence so as to produce a sequence of image data values representative of image information recorded on the document. The machine also includes a printing mechanism having a print drum, for carrying paper on which the image scanned by the reading means is to be printed, and also having a print head, opposed to the drum and mounted on the same movable carriage as the reading means, for printing on the paper the image data read by the reading means.

In use of the machine the scanning and printing operations must be synchronized, and to this end the carriage motion is synchronized with the print drum motion by suitable means. If an interruption occurs during scanning of a document the position at which the interruption occurred is stored in a memory together with information indicative of the synchronization conditions at the time of the interrupt. The carriage is then backed up to a position preceding that reached before the interruption so that, when the carriage is restarted after the interruption, its motion can be resynchronized with the print drum motion, based on the stored synchronization conditions, by the time the carriage reaches the interrupt position. Scanning is then resumed at the interruption position. However, the transient characteristics of the carriage drive system can still cause the scanning to be resumed at a position which is different from the interruption position, so that splitting or overlapping of the scanned image can still occur.

According to the present invention there is provided a document reading device including: reading means operable, when the device is performing a reading operation, to scan a document in a predetermined scanning sequence so as to produce a sequence of image data values representative of image information recorded on the document; characterised by read controlling means connected to the said reading means and operable, if such a reading operation is interrupted before completion thereof, to cause the said reading means to resume such scanning of the document, after the interruption is over, at a restart position that precedes, in the said scanning sequence, the last position that had been reached on the document when the interruption occurred; and by processing means connected for receiving both an initial set of image data values derived from a document area between the said restart position and the said last position, as scanned before the interruption, and a subsequent set of image data values derived from the said area as scanned after the interruption, and operable to produce therefrom a set of mean data values that are representative of the image information of the said area.

Reference will now be made, by way of example, to the accompanying drawings in which:
Figure 1 is a functional block diagram of a document reading device embodying the invention;
Figure 2 is a block diagram illustrating the construction of a document reading device according to an embodiment of the invention;
Figure 3 is a diagram illustrating the operation of the device of Figure 2;
Figure 4 is a graph illustrating the variation of the position of the reading head of the device of Figure 2 with time;
Figure 5 is a diagram for comparing results obtained from an image reproduction involving the device of Figure 2 with those obtained from a previously-proposed system; and
Figure 6 is a diagram illustrating one method of processing image information used in an embodiment of the invention.

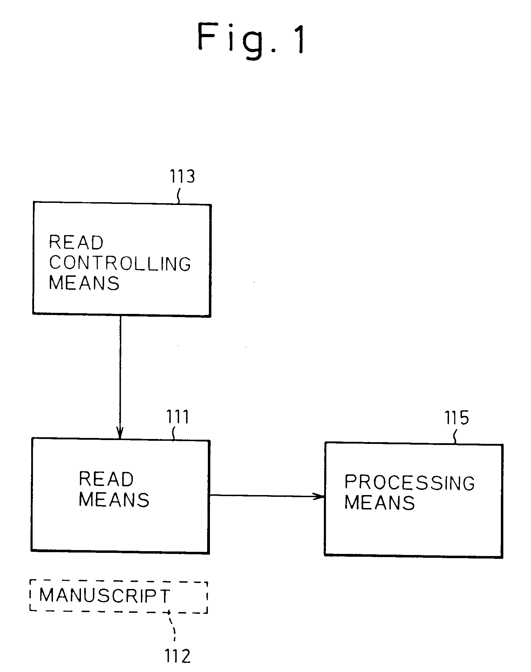

In the Figure 1 document reading device, a reading means 111 reads a document or manuscript 112, for example a sheet of paper, which bears image information such as written characters.

A read controlling means 113 controls the reading means 111 in such a way that, when the reading operation of the reading means 111 is interrupted while reading image information recorded on the document 112, a predetermined amount of the image information read immediately before the interruption occurred, for example the image information included in at least one horizontal scanning line, is reread after the reading operation is restarted.

A processing means 115 processes the image information reread by the reading means 111 after the interruption with the corresponding image information read by the reading means 111 before the interruption in such a way as to tend to reduce discontinuities in the image information finally output by the device.

Accordingly, the document reading device is configured in such a way that when the reading operation of the document is interrupted, the final image information produced by the device is obtained by using the image information read by the reading means before and after the interruption of the reading operation occurs.

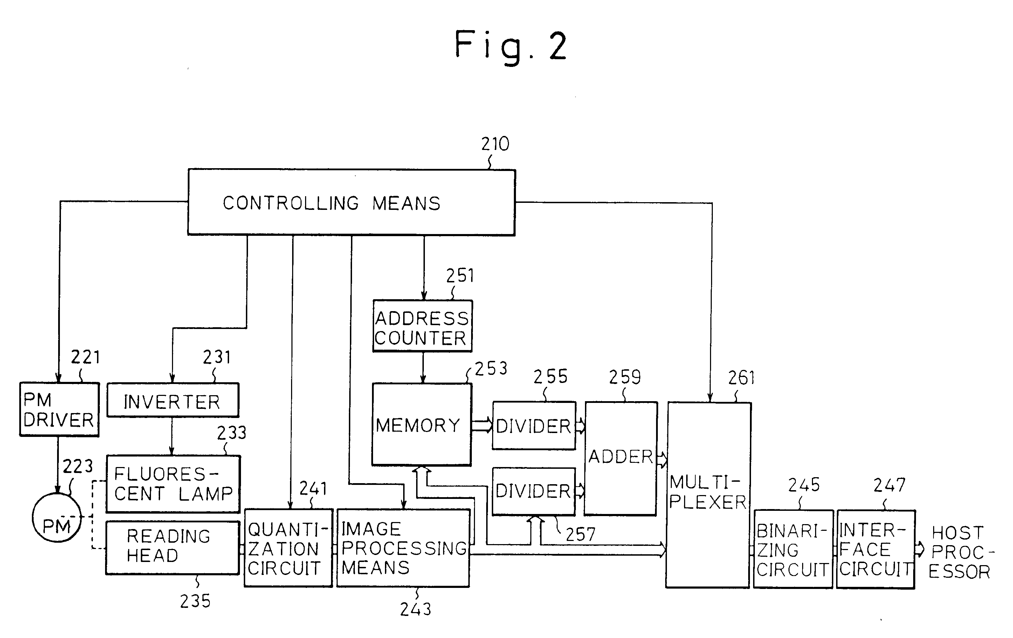

Figure 2 shows a document reading device according to an embodiment of this invention.

Before explaining Figure 2, the relationship between the embodiment shown in Figure 2 and each component shown in Figure 1 will be clarified as follows:

The reading means 111 in Figure 1 corresponds to the group of components in Figure 2 comprising a pulse motor driver 221, a pulse motor 223, an inverter 231, and a fluorescent lamp 233.

The read controlling means 113 in Figure 1 corresponds to a controlling means 210 as shown in Figure 2.

The processing means 115 in Figure 1 corresponds to the group of components in Figure 2 comprising the controlling means 210, an address counter 251, a memory 253, dividers 255 and 257, and an adder 259.

In Figure 2, the document reading device is provided with a reading head 235 for reading image information, i.e. characters comprising for example wording, symbols, drawings, photographs or the like, written on a document (e.g. paper), an inverter 231, a fluorescent lamp 233, a pulse motor 223 for moving the fluorescent lamp 233 and the reading head 235 to scan the manuscript, a pulse motor driver 221 for driving the pulse motor 223, a quantization circuit 241 for quantizing the image information read by the reading head 235, an image information processing means 243 for processing the image information quantized by the quantization circuit 241, a memory 253 for storing the image information therein, an address counter 251 for deciding the address of the storing position of the image information in the memory 253, dividers 255 and 257 for dividing the image information input thereinto by 2, an adder 259 for performing an adding operation on the information input thereinto, a multiplexer 261 for selecting the information input thereinto, a binary circuit 245 for converting multi level information into binary information, an interface circuit 247 for exchanging information with the host processor and a controlling means 210 which controls the operation of the whole device.

In this embodiment, the reading head 235 in the reading means 111 consists of at least one linear sensor array in which a plurality of sensors receiving image information are arranged in a line along the width-wise direction of the document, and each sensor can read one pixel of the image information, i.e. the information recorded on the document, and the information thus read by the reading means is converted by the quantization circuit 241 into quantized image information, so that the image information of each pixel is represented by an image data value having a particular level in a multilevel scale.

The multilevel scale may consist of 64 levels, for example.

In reading the image information, each sensor scans from one end of the line to other using a suitable circuit to read the image information in the line as one reading unit.

The system or means for bringing about this scanning operation along one line of the sensor array is called a horizontal scanning system or means.

The reading head is moved in the longitudinal direction of the document with a suitable pitch for reading the whole document. Accordingly, the system or means for bringing about this longitudinal movement of the reading head is called a vertical scanning system or means.

The reading operation in this embodiment of the invention is thus controlled by both a horizontal scanning system and a vertical scanning system, so that the whole manuscript can be scanned.

In particular, in this embodiment, when the reading operation is to be interrupted, advance of the vertical scanning system is stopped. When the reading operation is to be restarted, the vertical scanning system is restarted.

The controlling signal output from the controlling means 210 is applied to the pulse motor driver 221 and thereafter the controlling signal output from the pulse motor driver 221 is applied to the pulse motor 223.

The controlling signal output from the controlling means 210 is applied to the inverter 231 and thereafter the signal output from the inverter 231 is applied to the fluorescent lamp 233.

The controlling signal output from the controlling means 210 is applied to the address counter 251 and then the address data output from the address counter 251 is applied to the memory 253 to designate the storing position in the memory of the image information supplied thereto.

The memory 253 used in this embodiment serves to store the predetermined image information read by the reading means immediately before the interruption of the reading operation, in order to permit this information to be processed (as described later) rather than transmitted directly to the host processor.

The controlling signal output from the controlling portion 210 is applied to the quantization circuit 241, the image information processing means 243 and the multiplexer 261.

The image information read by the reading head 235 is input into the quantization circuit 241 and then the quantized image information output from the quantization circuit 241 is applied to the image information processing means 243.

Further, the image information output from the image information processing means 243 is input into the memory 253, the divider 257 and the multiplexer 261.

The image information output from the memory 253 is input into the divider 255 and the image information output from the dividers 255 and 257, respectively, is input into the adder 259.

The information output from the adder 259 is input to the multiplexer 261, and the image information output from the multiplexer 261 is input to the binary circuit 245. The binary image information output from the binary circuit 245 is input to the interface circuit 247. The image information output from the interface circuit 247 is applied to the host processor such as a personal computer or the like.

The pulse motor 223 drives the reading head 235 and the fluorescent lamp 233.

The operation of the document reading device of this embodiment of the invention will be explained below with reference to Figures 2 to 4.

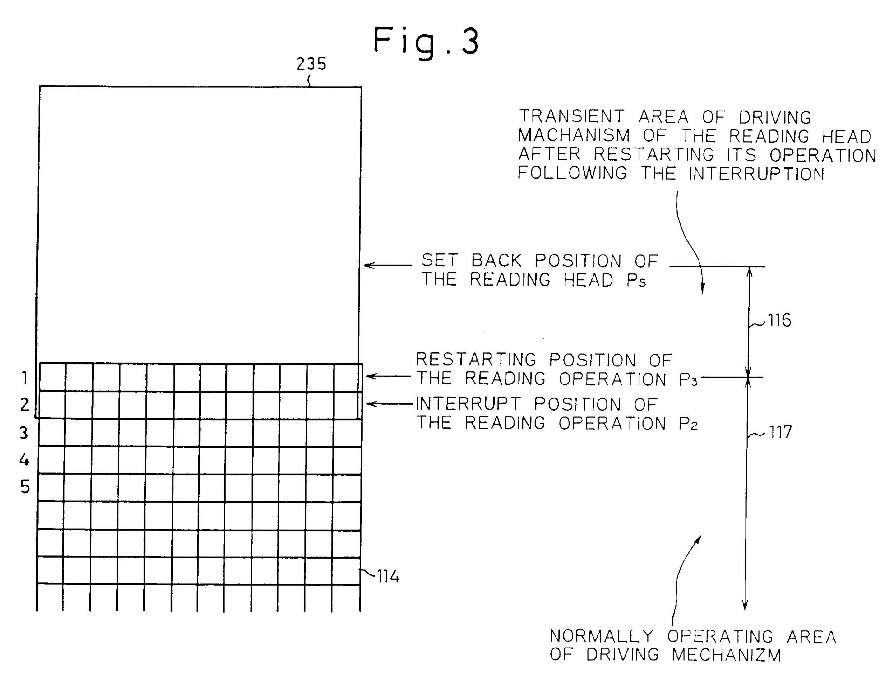

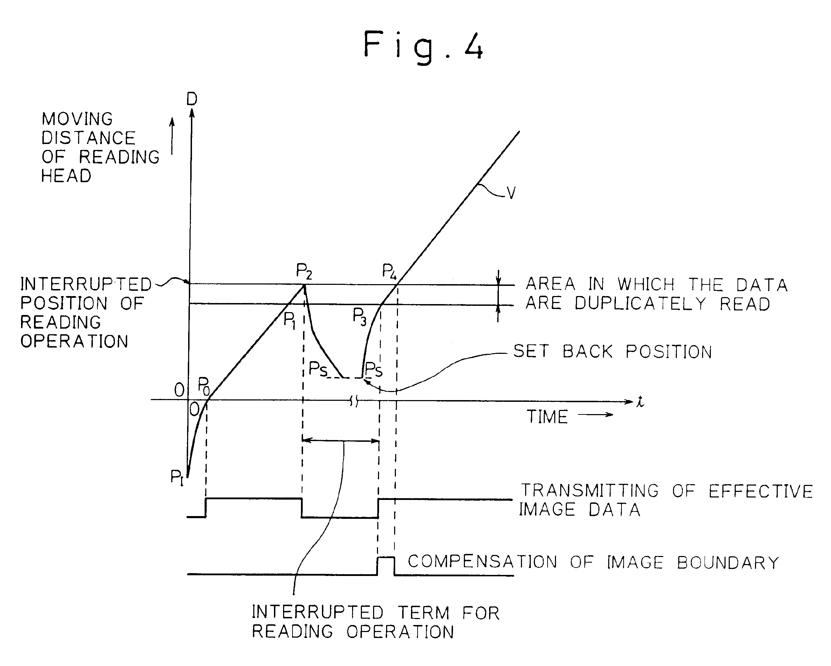

Figure 3 shows the position of the reading head with respect to the image information, and Figure 4 shows the variation of the position of the reading head with respect to time.

After receiving a read command from the host processor, the controlling means 210 starts to drive the pulse motor 223 (using the pulse motor driver 221) so that the fluorescent lamp 233 and the reading head 235, both of which are mechanically connected to the pulse motor 223, are moved to an initial position P_{I} for the start of a read operation.

The vertical scanning operation of the reading head 235, and also the horizontal scanning operation which is carried out simultaneously with the vertical scanning operation to define a predetermined scanning sequence, are started from the position P_{I} initially set above, although the actual reading of image information written on the document 112 is not yet started, and meanwhile, the fluorescent lamp 233 is turned ON by receiving the signal output from the inverter 231.

After the scanning speed of the reading head 235 reaches a predetermined speed, the reading operation for reading the document, i.e. the image information written on the paper, is started at point P_{O} as shown in Figure 4.

Note that in this embodiment the reading means is driven by a suitable mechanism and therefore it will usually take a predetermined time for the speed of the reading means to reach the predetermined speed due to inertia.

Therefore, during the period in which the speed of the reading means is less than the predetermined speed, i.e. the transient period 116 of the reading means indicated by P_{I} - P_{O} in Figure 4, no reading of image information takes place.

As mentioned above, when reading of the image information takes place normally after the reading operation is started, the image information (image data values) read by the reading means for every pixel 114 (as shown in Figure 3) is first transmitted to the quantization circuit 241 to have the analog information converted to digital information and thereafter the information thus digitized is processed in the image information processing means 243 with, for example, the process of enlarging or reducing the image.

In Figure 3 the lines labelled 3, 4, 5 represent lines of pixels which, in the above-mentioned predetermined scanning sequence, will be scanned after the line of pixels labelled 2 is scanned.

The image information thus processed in the image information processing means 243 is supplied to the binary circuit 245 through the multiplexer 261.

When the reading operation is proceeding normally the controlling means 210 applies to the multiplexer 261 a controlling signal which causes the multiplexer 261 to select the signals output from the image information processing means 243, and the image information (multi-level data from the image processing means 243) is transmitted to the binary circuit 245 which converts it into binary data.

The image information converted into binary data is then transmitted to the host processor through the interface circuit 247.

The operation of the device while the reading operation is proceeding normally is as explained above.

Next, the operation of the device will be described in a situation in which the information cannot be transmitted due to the reception of a relevant command from the host processor.

When such a command is received, the controlling means 210 stops the pulse motor 223 in accordance with the command and thereby the scanning operation of the reading head 235 is stopped, and simultaneously the reading operation of the document is interrupted.

At this time, the controlling means 210 serves to control the scanning systems mentioned above in such a way that a predetermined amount of image information, for example the image information corresponding to two scanning lines 1 and 2 as shown in Figure 3, which image information has been read by the head 235 from an area of the manuscript between the positions P₁ and P₂ as shown in Figure 4, is not transmitted to the host processor, but is stored in a predetermined location in the memory 253 designated by the address counter 251.

Thus, this image information is temporarily stored in the memory for further processing.

The controlling means 210 then sets the reading head 235 and the fluorescent lamp 233 back to the position P_{S} determined in such a manner as to permit the predetermined image information, for example the image information corresponding to the two scanning lines 1 and 2 of the reading head 235, to be read again (taking the transient characteristics of driving system into account), and in this situation the controlling means 210 is waiting to receive a command to allow further image information to be transmitted to the host processor.

When the controlling means 210 receives the command to allow further image information to be transmitted to the host processor, it starts to drive the pulse motor 223 again and thereby the reading head 235 and the fluorescent lamp 233 start to move.

However, in the embodiment of Figure 2, as the reading head 235 has already been set back to the position P_{S} determined as explained above, the reading operation is not restarted until the scanning speed of the reading head 235 reaches the predetermined normal speed.

This transient period as mentioned above is illustrated in Figure 4 as a line P_{S} - P₃ during which time the reading operation is not actuated.

When the scanning speed of the reading head 235 reaches the predetermined normal speed at the position P₃, the reading operation resumes to read the image information, starting from the two scanning lines 1 and 2 as mentioned above. Thus, these lines 1 and 2 are reread. This situation is illustrated in Figure 4 as a line P₃ - P₄.

Accordingly, when the image information corresponding to line 1 is reread by the reading head 235 after the interruption, the reread image information for this line will be transmitted to the divider 257, while the image information corresponding to line 1 as read by the reading head 235 before the interruption and stored in the memory 253, is simultaneously read out from the memory and applied to the divider 255.

The two sets of image data values (each set corresponding to the image information for line 1) transmitted to the dividers 255 and 257 respectively are divided by 2 by the dividers 255 and 257 and thereafter the image information from each divider is transmitted to the adder 259 so that the two sets of image information for line 1 can be added together.

The adder 259 serves as a means for merging the image information processed in the dividers 255 and 257. In this example the merging algorithm is based on the arithmetic mean of the two sets of image information.

The merged image information corresponding to line 1 produced by the adder 259 is input to the multiplexer 261. At this time, as the multiplexer 261 is controlled in such a way that the input signal received from the adder 259 is output from the multiplexer in accordance with a controlling signal output from the controlling means 210, the image information corresponding to line 1 is passed from the adder 259 to the binary circuit 245.

Finally the merged image information corresponding to line 1 is binarized by the binary circuit 245 and transmitted to the host processor via the interface circuit 247.

After that, when the image information corresponding to line 2 is reread by the reading head 235, it is transmitted to the divider 257 in the same manner as for line 1, while the image information corresponding to line 2 read by the reading head 235, i.e. the information corresponding to the last line of the two lines read before the interruption, stored in the memory 253, is simultaneously read out therefrom and transmitted to the divider 255.

Thereafter, the image information is processed in the same manner as mentioned above, i.e. it is divided by two in the dividers 255 and 257, added together in the adder 259 and transmitted to the host processor via the multiplexer 261, the binary circuit 245 and the interface circuit 247.

As explained above, in this embodiment, the image information corresponding to two scanning lines is reread after the reading operation is resumed, is merged with the image information corresponding to two scanning lines read immediately before the interruption of the reading operation utilizing an arithmetic mean algorithm, and the merged data is transmitted to the relevant receiving device.

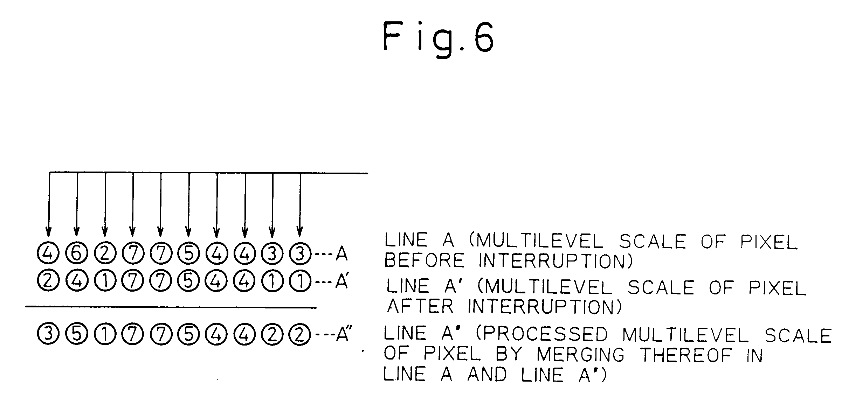

The effect of processing the image information utilizing this arithmetic mean algorithm will be explained below with reference to Figure 6.

The line A shows a line (one reading unit) of the image information read by the reading head before the interruption occurs and the line A′ shows the same line read after the reading operation was resumed. Each circle shown in lines A and A′ represents the position of the pixel and the numeral enclosed in the circle represents an image data value, as measured on the multilevel scale, for the pixel concerned.

The line A˝ shows the resulting line of the image information processed by the above-described arithmetic mean method.

Each pixel in the line A˝ has an image data value (as measured on the multilevel scale) which was obtained by producing a mean of the image data values for the pixel concerned obtained before and after the interruption.

The image information corresponding to the third line and successive lines read by the reading head 235 after the reading operation is restarted can be transmitted to the host processor in the normal manner because the multiplexer 261 is then caused to output the signals received from the image information processing means 243 in accordance with a controlling signal output by the controlling means 210.

In this embodiment, when the reading operation is interrupted, a predetermined amount of image information, for example that corresponding to at least one scanning line, and preferably two scanning lines, of the reading head 235 (the last scanning line, or lines, read by the reading means immediately before the interruption of the reading operation) is stored in the memory 253.

The reading head 235 and the fluorescent lamp 233 are then set back to an initial position from which the reading head 235 starts to move to a restart position, at which reading of the image information is resumed, this restart position being such as to permit rereading of the image information corresponding to those two lines for example, and the initial position being determined in such a way that the reading head 235 can reach the normal scanning speed by the time it comes to the restart position as mentioned above, and thereafter the reading operation is restarted.

The image information corresponding to the first two lines for example, read by the reading head 235 after the reading operation is restarted, is transmitted to the host processor after being processed with the image information corresponding to the 2 lines previously stored in the memory 253, utilizing an arithmetic mean process.

Consequently, when an interruption of the reading operation occurs, by processing the image information obtained by the reading means before the interruption of the reading operation with that obtained after the interruption, discontinuities in the final image can be eliminated.

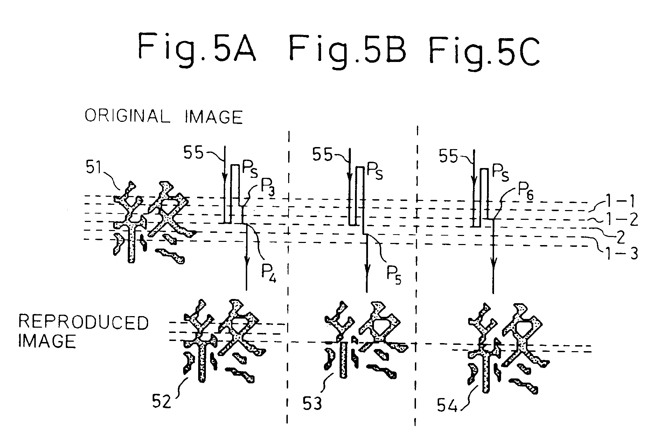

The differences between the final image obtained by the embodiment of Figure 2 and that obtained by the previously-proposed vertical scanning method will be explained below with reference to Figures 5A - 5C.

In Figures 5A to 5C, for example, an original character 51 is written on a document and it is now assumed to have been read by the reading head, an interruption of the reading operation having occurred at line 2.

In the previously-proposed method, the reading head is set back to the scan reverse position P_{S} as indicated by the tracing line 55, and when the reading operation is restarted, the reading head is intended to be advanced to the line 2 which is a target line for restarting the reading operation, although in one case, as shown in Figure 5B, the reading head is advanced to the line 1-3 beyond the line 2 whilst the reading head is still maintained in an inactive (non-reading) condition, and then the reading operation is resumed from the line shown as P₅.

In this previously-proposed method, the image information read by the reading head before the interruption occurred has already been transmitted to the host processor, and on the other hand, the image information which is read after the reading operation is resumed relates to the point P₅ on the line 1-3 onwards and this image information is also immediately transmitted to the host processor, and therefore one line of the image information will be missing, so that a final character 53 having one line of the image information omitted therefrom is obtained as shown in Figure 5B.

On the other hand, in another case using the previously-proposed method shown in Figure 5C, the reading head is set back to the scan reverse position P_{S} as indicated by the tracing line 55, and when the reading operation is restarted, the reading head is advanced only to the line 1-2 which is one line before the target line 2 for restarting the reading operation, with the reading head still being held in an inactive (non-reading) condition, and then the reading operation is resumed from the point P₆ on the line 1-2.

In this case, because the image information read by the reading head before the interruption occurred has already been transmitted to the host processor, and the image information which is read after the reading operation is resumed relates to the point P₆ on the line 1-2 onwards and is also immediately transmitted to the host processor, one extra line of the image information will be transmitted so that a final character 54 including one extra line of image information is obtained as shown in Figure 5C.

But in the embodiment of Figure 2, as shown in Figure 5A, the image information corresponding to a plurality of lines read by the reading head immediately before the interruption has occurred, for example the image information from the document area between the line 1-1 and line 2, is stored in the memory and is not immediately transmitted to the host processor, and on resuming the reading operation, reading is restarted from the point P₃ to read again the image information from the said document area, and thereafter both sets of image information are merged and processed to produce a set of mean data values representing a combined image for the said area, and this information thus processed is transmitted to the host processor to enable the original character 51 to be reproduced acceptably.

The final character 52 thereby obtained in this embodiment is shown in Figure 5A.

According to this embodiment of the invention, in order to compensate for a possible discontinuity between the image information obtained before the interruption and that obtained after the restart of the reading operation, the same area of the document is read before and after the interruption and both sets of image data values derived from the said area are merged and processed to produce modified image data values so that the portion of the image (e.g. the line of image information) at which the interruption occurred is reproduced acceptably.

In this embodiment of the invention, hardware circuitry is used to provide the processing means. However, the processing operation concerned could alternatively be carried out using software to control a microprocessor or the like.

Furthermore, although in this embodiment an arithmetic mean processing method was used in the processing means for processing the image information with a view to eliminating any unnatural characteristic from the final image information, any method for obtaining mean image data values can be used, for example geometric mean, harmonic mean methods or the like can be utilized.

Moreover, in this embodiment, the image information corresponding to one scanning line or two scanning lines is read by the reading head 235 before and after the interruption of the reading operation. However, it will be appreciated that image information corresponding to more than two scanning lines may be read by the reading head 235 before and after the interruption.

Further, in this embodiment, the control of the vertical scanning system during the reading operation is carried out by moving the reading means (reading head 235) but alternatively it may be carried out by moving the paper, i.e. the document, instead of moving the reading means.

In a document reading device embodying the present invention, when a reading operation, for reading image information written on a paper or the like, is interrupted under the control of the controlling means, a predetermined amount of the image information read by the reading means immediately before the interruption occurred, is read again after the reading operation is resumed and the image information thus obtained is processed to produce final image information having a continuous configuration. As a result of such processing of the respective sets of image information read by the reading means before and after the interruption of the reading operation, discontinuities in the reproduced image can be eliminated, whereby the reproduced image can be enhanced.

## Claims

1. A document reading device including:
reading means (235) operable, when the device is performing a reading operation, to scan a document in a predetermined scanning sequence so as to produce a sequence of image data values representative of image information recorded on the document;
characterised by read controlling means (210) connected to the said reading means and operable, if such a reading operation is interrupted before completion thereof, to cause the said reading means to resume such scanning of the document, after the interruption is over, at a restart position (P₃) that precedes, in the said scanning sequence, the last position (P₂) that had been reached on the document when the interruption occurred; and by
processing means (255, 257, 259) connected for receiving both an initial set of image data values derived from a document area between the said restart position (P₃) and the said last position (P₂), as scanned before the interruption, and a subsequent set of image data values derived from the said area as scanned after the interruption, and operable to produce therefrom a set of mean data values that are representative of the image information of the said area.

2. A device as claimed in claim 1, wherein the said scanning sequence consists of a plurality of individual scanning lines that are scanned one after another by the reading means during the course of such a reading operation, the device including respective horizontal and vertical scanning means for bringing about the said scanning of the document under the control of the said read controlling means (210);
the said horizontal scanning means being actuable to bring about scanning along the said individual scanning lines on the document, so as to enable the reading means (235) to produce for each scanning line a reading unit made up of the image data values derived from the line concerned; and
the said vertical scanning means (223) being actuable to advance the scanning of the document in a direction perpendicular to the scanning lines by an amount corresponding to the scanning line pitch so as to enable the reading means to scan the next scanning line on the document.

3. A device as claimed in claim 2, wherein when such an interruption occurs the actuation of the said vertical scanning means (223) is stopped, so as to prevent such an advance of the scanning in the said direction pending the interruption, and after the interruption is over the vertical scanning means are actuated again.

4. A device as claimed in claim 2 or 3, wherein the said initial and subsequent sets of image data values each comprise at least one such reading unit derived from the said area, and the device further includes storing means (253) operable to store the or each reading unit of the said initial set;
the said processing means (255, 257, 259) being connected to the said storing means for receiving therefrom, after the interruption is over, the or each stored reading unit of the said initial set, and also being connected to the said reading means for receiving therefrom the or each reading unit of the said subsequent set, and being operable to produce from respective corresponding reading units of the initial and subsequent sets the said set of mean data values that are representative of the image information of the said area.

5. A device as claimed in claim 2, 3 or 4, wherein the said vertical scanning means (223) move the reading means in the said direction to bring about the said advance of the scanning in that direction, the document remaining stationary.

6. A device as claimed in claim 2, 3 or 4, wherein the said vertical scanning means move the document in the said direction to bring about the said advance of the scanning in that direction, the said reading means remaining stationary.

7. A device as claimed in any preceding claim, wherein each image data value represents, on a predetermined multilevel scale, the image information of a particular pixel (114) on the document.

## Patentansprüche

1. Dokument-Lesevorrichtung, welche aufweist:
eine Leseeinrichtung (235), die betrieben werden kann, wenn die Vorrichtung einen Lesevorgang durchführt, um ein Dokument in einer vorbestimmten Abtastsequenz derart abzutasten, daß eine Sequenz von Bilddatenwerten hergestellt wird, die für die auf dem Bilddokument aufgezeichnete Bildinformation repräsentativ ist;
gekennzeichnet durch eine Lesesteuereinrichtung (210), die mit der Leseeinrichtung verbunden ist und betrieben werden kann, falls ein solcher Lesevorgang vor seiner Vervollständigung unterbrochen wird, um die Leseeinrichtung zu veranlassen, ein solches Abtasten des Dokumentes nach Beendigung der Unterbrechung an einer Wiederaufnahmeposition (P₃) wieder aufzunehmen, welche in dieser Abtastsequenz vor derjenigen Position (P₂) liegt, die auf dem Dokument zuletzt erreicht wurde, als sich die Unterbrechung ereignete; und durch
eine Verarbeitungseinrichtung (255, 257, 259), die solchermaßen verbunden ist, daß sie sowohl einen anfänglichen Satz von Bilddatenwerten empfängt, welcher aus einem Dokumentbereich zwischen der Wiederaufnahmeposition (P₃) und der letzten Position (P₂) erhalten wurde, wie er vor der Unterbrechung abgetastet wurde, als auch einen darauffolgenden Satz von Bilddatenwerten, der aus diesem Bereich erhalten wurde, wie er nach der Unterbrechung abgetastet wurde, und betrieben werden kann, um daraus einen Satz von Datenmittelwerten herzustellen, die für die Bildinformation dieses Bereiches repräsentativ sind.

2. Vorrichtung nach Anspruch 1, bei der die Abtastsequenz aus einer Mehrzahl von einzelnen Abtastzeilen besteht, die nacheinander von der Leseeinrichtung im Verlauf eines solchen Lesevorganges abgetastet werden, welche Vorrichtung eine jeweilige horizontale und vertikale Abtasteinrichtung enthält, um das Abtasten des Dokumentes unter der Steuerung der Lesesteuereinrichtung (210) herbeizuführen;
die horizontale Abtasteinrichtung betätigt werden kann, um ein Abtasten entlang der einzelnen Abtastzeilen auf dem Dokument herbeizuführen, um die Leseeinrichtung (235) zu befähigen, für jede Abtastzeile eine Leseeinheit herzustellen, die aus den aus der betreffenden Zeile erhaltenen Bilddatenwerten besteht; und
die vertikale Abtasteinrichtung (223) betätigt werden kann, um das Abtasten des Dokumentes in einer Richtung senkrecht zu den Abtastzeilen um einen Betrag, der dem Abstand der Abtastzeilen entspricht, vorwärtszubewegen, um es der Leseeinrichtung zu ermöglichen, die nächste Abtastzeile auf dem Dokument abzutasten.

3. Vorrichtung nach Anspruch 2, bei der, wenn sich eine solche Unterbrechung ereignet, die Betätigung der vertikalen Abtasteinrichtung (223) angehalten wird, um ein solches Vorrücken der Abtastung in der genannten Richtung für die Dauer der Unterbrechung zu verhindern, und nach der Beendigung der Unterbrechung die vertikale Abtasteinrichtung wieder betätigt wird.

4. Vorrichtung nach Anspruch 2 oder 3, bei der der anfängliche sowie weitere Sätze von Bilddatenwerten jeweils eine solche aus dem Bereich erhaltene Leseeinheit aufweisen, und die Vorrichtung des weiteren eine Speichereinrichtung (253) aufweist, die betätigbar ist, um die oder jede Leseeinheit des anfänglichen Satzes zu speichern;
die Verarbeitungseinrichtung (255, 257, 259) mit der Speichereinrichtung verbunden ist, um von dieser nach Beendigung der Unterbrechung die oder jede gespeicherte Leseeinheit des anfänglichen Satzes zu erhalten, und auch mit der Leseeinrichtung verbunden ist, um von dieser die oder jede Leseeinheit des darauffolgenden Satzes zu erhalten, und betätigbar ist, um aus jeweiligen entsprechenden Leseeinheiten des anfänglichen und von darauffolgenden Sätzen den Satz von Datenmittelwerten herzustellen, welche für die Bildinformation des Bereiches repräsentativ sind.

5. Vorrichtung nach Anspruch 2, 3 oder 4, bei der die vertikale Abtasteinrichtung (223) die Leseeinrichtung in der genannten Richtung bewegt, um das Vorrücken des Abtastens in dieser Richtung herbeizuführen, wobei das Dokument stationär bleibt.

6. Vorrichtung nach Anspruch 2, 3 oder 4, bei der die vertikale Abtasteinrichtung das Dokument in der genannten Richtung bewegt, um das Vorrücken des Abtastens in der Richtung herbeizuführen, wobei das Dokument stationär bleibt.

7. Vorrichtung nach einem der vorhergehenden Ansprüche, bei der jeder Bilddatenwert auf einer vorbestimmten Mehrfachpegel-Skala die Bildinformation eines bestimmten Pixels (114) auf dem Dokument darstellt.

## Revendications

1. Dispositif de lecture de document comprenant :
un moyen de lecture (235) servant, lorsque le dispositif effectue une opération de lecture, à balayer un document suivant une séquence de balayage prédéterminée de façon à produire une séquence de valeurs de donnée d'image représentative de l'information d'image enregistrée sur le document ;
caractérisé par un moyen de commande de lecture (210) connecté audit moyen de lecture et servant, si une telle opération de lecture est interrompue avant sa fin, à faire que ledit moyen de lecture reprenne un tel balayage du document, après la fin de l'interruption, au droit d'une position de redémarrage (P₃) qui précède, dans ladite séquence de balayage, la dernière position (P₂) qui a été atteinte sur le document lorsque l'interruption s'est produite ; et par
un moyen de traitement (255, 257, 259) connecté pour recevoir à la fois un ensemble initial de valeurs de donnée d'image obtenu à partir d'une zone de document, située entre ladite position de redémarrage (P₃) et ladite dernière position (P₂), balayée avant l'interruption, et un ensemble ultérieur de valeurs de donnée d'image obtenu à partir de ladite zone balayée après l'interruption, et servant à produire à partir de là un ensemble de valeurs de donnée moyennes qui sont représentatives de l'information d'image de ladite zone.

2. Dispositif selon la revendication 1, dans lequel ladite séquence de balayage est constituée de plusieurs lignes de balayage individuelles qui sont balayées l'une après l'autre par le moyen de lecture au cours d'une telle opération de balayage, le dispositif incluant des moyens de balayage horizontal et vertical respectifs pour effectuer ledit balayage du document sous les ordres dudit moyen de commande de lecture (210) ;
ledit moyen de balayage horizontal étant manoeuvrable pour effectuer le balayage suivant lesdites lignes de balayage individuelles sur le document, de manière à permettre au moyen de lecture (235) de produire pour chaque ligne de balayage une unité de lecture constituée des valeurs de donnée d'image obtenues à partir de la ligne concernée ; et
ledit moyen de balayage vertical (223) étant manoeuvrable pour faire avancer le balayage du document dans une direction perpendiculaire aux lignes de balayage d'une quantité correspondant au pas de ligne de balayage de façon à permettre au moyen de lecture de balayer la ligne de balayage suivante sur le document.

3. Dispositif selon la revendication 2, dans lequel lorsqu'une telle interruption se produit la mise en oeuvre dudit moyen de balayage vertical (223) est arrêtée, de manière à empêcher l'avancée du balayage dans ladite direction pendant l'interruption, et dans lequel après la fin de l'interruption, le moyen de balayage vertical est de nouveau mis en oeuvre.

4. Dispositif selon la revendication 2 ou 3, dans lequel lesdits ensembles de valeurs de donnée d'image initial et ultérieur comprennent chacun au moins une unité de lecture obtenue à partir de ladite zone, et dans lequel le dispositif comprend en outre un moyen de mémorisation (253) servant à mémoriser l'unité de lecture, ou chaque unité de lecture, dudit ensemble initial ;
ledit moyen de traitement (255, 257, 259) étant connecté audit moyen de mémorisation pour en recevoir, après la fin de l'interruption, l'unité de lecture, ou chaque unité de lecture, mémorisée dudit ensemble initial, et étant également connectée audit moyen de lecture pour en recevoir l'unité de lecture, ou chaque unité de lecture, dudit ensemble ultérieur, et servant à produire, à partir des unités de lecture correspondantes respectives des ensembles initial et ultérieur, ledit ensemble de valeurs de donnée moyennes qui sont représentatives de l'information d'image de ladite zone.

5. Dispositif selon la revendication 2, 3, ou 4, dans lequel ledit moyen de balayage vertical (223) déplace le moyen de lecture dans ladite direction propre à effectuer ladite avancée du balayage dans cette direction, le document demeurant immobile.

6. Dispositif selon la revendication 2, 3, ou 4, dans lequel ledit moyen de balayage vertical déplace le document dans ladite direction propre à effectuer ladite avancée du balayage dans cette direction, ledit moyen de lecture demeurant immobile.

7. Dispositif selon l'une quelconque des revendications précédentes, dans lequel chaque valeur de donnée d'image représente, sur une échelle à niveaux multiples prédéterminée, l'information d'image d'un pixel particulier (114) du document.
